# EUROPÄISCHE PATENTSCHRIFT

(11) **EP 0 809 870 B1**
(45) Veröffentlichungstag und Bekanntmachung des Hinweises auf die Patenterteilung: **17.05.2000**
(21) Anmeldenummer: 96902231.8
(22) Anmeldetag: 13.02.1996
(51) Int. Cl.: H01M 8/24, H01M 8/04

(54) **FESTELEKTROLYT-HOCHTEMPERATUR-BRENNSTOFFZELLENMODUL UND VERFAHREN ZU SEINEM BETRIEB**
SOLID ELECTROLYTE HIGH-TEMPERATURE FUEL CELL MODULE AND METHOD OF OPERATING THE SAME
MODULE A PILES A COMBUSTIBLE HAUTE TEMPERATURE A ELECTROLYTE SOLIDE ET PROCEDE PERMETTANT DE LE FAIRE FONCTIONNER

(30) Priorität: 16.02.1995 DE 19505274
(43) Veröffentlichungstag der Anmeldung: 03.12.1997
(73) Patentinhaber: SIEMENS AKTIENGESELLSCHAFT, 80333 München (DE)
(72) Erfinder: BLUM, Ludger, D-91058 Eltersdorf (DE); GREINER, Horst, D-91301 Forchheim (DE); KLEINLEIN, Wilhelm, D-90762 Fürth (DE); ROTH, Reinhard, D-91083 Baiersdorf (DE)
(86) Internationale Anmeldenummer: DE9600226
(87) Internationale Veröffentlichungsnummer: WO9625773

(56) Entgegenhaltungen:
- EP-A- 0 399 077
- EP-A- 0 473 540
- WO-A-92/16029
- WO-A-94/22177
- WO-A-96/05625
- WO-A-96/08052
- FR-A- 2 182 650
- US-A- 4 644 751
- US-A- 5 338 622
- PATENT ABSTRACTS OF JAPAN vol. 95, no. 001 & JP,A,07 022059 (SANYO ELECTRIC CO LTD), 24.Januar 1995,
- PATENT ABSTRACTS OF JAPAN vol. 010, no. 175 (E-413), 20.Juni 1986 & JP,A,61 024169 (MITSUBISHI DENKI KK), 1.Februar 1986,
- PATENT ABSTRACTS OF JAPAN vol. 007, no. 229 (E-203), 12.Oktober 1983 & JP,A,58 119168 (TOKYO SHIBAURA DENKI KK), 15.Juli 1983,
- PATENT ABSTRACTS OF JAPAN vol. 008, no. 185 (E-262), 24.August 1984 & JP,A,59 075573 (TOSHIBA KK), 28.April 1984,

## Beschreibung

Die Erfindung bezieht sich auf ein Festelektrolyt-Hochtemperatur-Brennstoffzellenmodul und ein Verfahren zu seinem Betrieb.

Es ist bekannt, daß bei der Elektrolyse von Wasser die Wassermoleküle durch elektrischen Strom in Wasserstoff und Sauerstoff zerlegt werden. In der Brennstoffzelle läuft dieser Vorgang in umgekehrter Richtung ab. Bei der elektrochemischen Verbindung von Wasserstoff und Sauerstoff zu Wasser entsteht elektrischer Strom: mit hohem Wirkungsgrad und - wenn als Brenngas reiner Wasserstoff eingesetzt wird - ohne Emission von Schadstoffen und Kohlenmonoxid. Auch mit technischen Brenngasen, beispielsweise Erdgas, und mit Luft anstelle von reinem Sauerstoff, erzeugt die Brennstoffzelle deutlich weniger Schadstoffe und weniger CO₂ als andere Technologien fossiler Energieträger. Die technische Umsetzung dieses Prinzips hat zu sehr unterschiedlichen Lösungen, mit verschiedenartigen Elektrolyten und mit Betriebstemperaturen zwischen 80 °C und 1000 °C, geführt.

Bei der Festelektrolyt-Hochtemperatur-Brennstoffzelle (Solid Oxid Fuel Cell; SOFC) dient Erdgas als primäre Energiequelle. Die Leistungsdichte von 1 MW/m³ ermöglicht einen sehr kompakten Aufbau. Die zusätzlich entstehende Wärme hat eine Temperatur von über 900 °C.

Bei einem Festelektrolyt-Hochtemperatur-Brennstoffzellenmodul, in der Fachliteratur wird ein Brennstoffzellenmodul auch "Stack" genannt, liegen unter einer oberen bipolaren Deckplatte der Reihenfolge nach eine Fensterfolie, ein Festelektrolyt-Elektroden-Element, eine weitere Fensterfolie, eine weitere bipolare Platte usw. aufeinander. Dabei bilden jeweils ein zwischen zwei benachbarten bipolaren Platten liegendes Festelekrtolyt-Elektroden-Element, einschließlich der beidseitig am Festelektrolyt-Elektroden-Element unmittelbar anliegenden Fensterfolien und der an den Fensterfolien anliegenden Seiten jeder der beiden bipolaren Platten, zusammen eine Festelektrolyt-Hochtemperatur-Brennstoffzelle.

Dieser und weitere Typen von Brennstoffzellenmodulen sind beispielsweise aus dem "Fuel Cell Handbook" von A. J. Appelby und F. R. Foulkes, Van Nostraud Reinhold, Seiten 442 bis 454 oder aus dem Aufsatz "Brennstoffzellen als Energiewandler", Energiewirtschaftliche Tagesfragen, Juni 1993, Heft 6, Seite 382 bis 390, bekannt.

Aus den deutschen Offenlegungsschriften 39 35 722 und 40 09 138 sind Festelektrolyt-Hochtemperatur-Brennstoffzellenmodule bekannt, die aus mehreren in Serie geschalteten, planen, fest aufeinanderliegenden Festelektrolyt-Hochtemperatur-Brennstoffzellen bestehen. Zwischen unmittelbar benachbarten in Serie geschalteten Zellen ist eine bipolare Platte eingebaut, die die Kathode der einen Zelle mit der Anode der unmittelbar benachbarten Zelle elektrisch leitend verbindet und eine Betriebsgasversorgung mittels beidseitig eingelassener Kanäle sicherstellt. Dabei sind die betriebsgasführenden Kanäle parallel zur Längsachse des Festelektrolyt-Hochtemperatur-Brennstoffzellenmoduls angeordnet und erstrecken sich durch das gesamte Festelektrolyt-Hochtemperatur-Brennstoffzellenmodul.

Ein wesentliches Problem beim Betrieb eines Festelektrolyt-Hochtemperatur-Brennstoffzellenmoduls besteht darin, die bei der Reaktion entstehende Wärme aus dem Festelektrolyt-Hochtemperatur-Brennstoffzellenmodul abzuführen. Ein Teil dieser Wärme wird über die Betriebsmittel abgeführt. Die über die Betriebsmittel abgeführte Wärmemenge ist umso größer, je größer die Temperaturdifferenz zwischen einströmenden und ausströmenden Betriebsmitteln ist. Eine höhere Temperaturdifferenz kann, wenn die Betriebsmittel mit niedrigerer Temperatur in das Festelektrolyt-Hochtemperatur-Brennstoffzellemodul einströmen, zu einer kleineren Arbeitstemperatur der Brennstoffzellen führen, was zu einer Reduzierung der Leistungsfähigkeit des Festelektrolyt-Elektroden-Elements führt. Zugleich besteht aufgrund der Temperaturdifferenzen im aktiven Zellbereich die Gefahr, daß die mechanisch empfindlichen Elektrolyte beschädigt werden.

Ein weiteres Problem entsteht beim Betrieb mit zu reformierenden Betriebsmitteln. Durch die Reformierungsreaktion wird der Bereich für die Einspeisung des Betriebsmittels zusätzlich abgekühlt, was ebenfalls zu mechanischen Spannungen in den Elektrolyten führt.

Desweiteren ist aus der deutschen Offenlegungsschrift 42 17 892 eine Brennstoffzellenanordnung bekannt, bei der ein Abgas aus einer Stapelkammer, die eine Vielzahl von Festelektrolyt-Brennstoffzellen umfaßt, außerhalb der Stapelkammer in einer Brennkammer verbrannt wird. Die Wärme des Verbrennungsgases wird in einem der Stapelkammer nachgeschalteten Wärmetauscher an ein Oxidations- und ein Reaktionsgas übertragen, welche anschließend der Stapelkammer zum Betreiben der Festelektrolyt-Brennstoffzellen zugeführt werden.

Aus der nach veröffentlichten WO 96/08052 ist eine Brennstoffzellen-Anordnung bekannt, bei der ein Abgas aus der Brennstoffzellenanordnung unmittelbar neben der Brennstoffzellenanordnung nachverbrannt wird. Die Wärme der Verbrennung wird in einem Wärmetauscher einem Betriebsgas der Brennstoffzellenanordnung übertragen.

Ein Hochtemperatur-Brennstoffzellen-Stack mit integrierter Wärmetauscheranordnung zur Abfuhr der freigewordenen Wärme aus demselbigen ist auch aus der deutschen Offenlegungsschrift 41 37 968 bekannt. Dort wird ein Abgas für eine Weiterverwendung in einer nachgeschalteten Gasturbine innerhalb des Hochtemperatur-Brennstoffzellen-Stacks auf die notwendige Eingangstemperatur der Gasturbine erhitzt. Zusätzlich wird außerhalb des Hochtemperatur-Brennstoffzellen-Stacks mit der freigewordenen Wärme ein Oxidations- und ein Reaktionsgas für den Hochtemperatur-Brennstoffzellen-Stack erwärmt.

Eine ebenfalls in einen Brennstoffzellen-Stack integrierte Wärmetauscheranordnung, allerdings nur zum Kühlen des besonders heißen Bereichs um die Blockmittelachse, ist in der JP 7022059 (Patent Abstracts of Japan) offenbart: Durch ein in der Blockmittelachse angebrachtes Rohr strömt ein Betriebsgas und nimmt einen kleinen Teil der im Brennstoffzellen-Block erzeugten Wärme auf.

In der JP 61024169A (Patent Abstracts of Japan) ist ein als Reformationskanal dienendes Rohr innerhalb einer Brennstoffzellen-Anordnung offenbart. Durch den Reformationsprozeß im Rohr wird der Brennstoffzellen-Anordnung Wärme entzogen und der Teilbereich der Brennstoffzellen-Anordnung direkt um das Rohr gekühlt.

Der Erfindung liegt somit die Aufgabe zugrunde, ein Verfahren zum Betreiben eines Festelektrolyt-Hochtemperatur-Brennstoffzellenmoduls anzugeben, bei dem die Wärme effizient und mit geringem technischen Aufwand zum Erwärmen der Betriebsmittel benutzt wird. Außerdem soll ein Festelektrolyt-Hochtemperatur-Brennstoffzellenmodul zum Durchführen des Verfahrens angegeben werden.

Die erstgenannte Aufgabe wird gelöst mit den Merkmalen des Patentanspruches 1. Die zweitgenannte Aufgabe wird gelöst mit den Merkmalen des Patentanspruches 2.

Bei diesem Verfahren zum Betreiben eines Festelektrolyt-Hochtemperatur-Brennstoffzellenmoduls, das sich aus mehreren aufeinandergestapelten Brennstoffzellen zusammensetzt und denen ein zum Betrieb der Brennstoffzellen notwendiges Betriebsmittel zugeführt wird, wird gemäß der Erfindung die in den Brennstoffzellen beim Verbrennungsprozeß entstehende Wärme zum Erwärmen des Betriebsmittels vor seinem Einspeisen in die Brennstoffzellen verwendet, bei dem das gesamte Betriebsmittel einen innerhalb des Festelektrolyt-Hochtemperatur-Brennstoffzellenmoduls angeordneten ersten Kanalabschnitt zum Aufnehmen der Wärme durchströmt. Ein Teil der in den Brennstoffzellen produzierten Wärme wird somit außerhalb der Brennstoffzellen aber innerhalb des Festelektrolyt-Hochtemperatur-Brennstoffzellenmoduls auf das Betriebsmittel übertragen. Bei geeigneter Auslegung der Temperatur des Betriebsmittels vor seinem Einspeisen in das Festelektrolyt-Hochtemperatur-Brennstoffzellenmodul wird das Betriebsmittel durch diese Wärmeübertragung auf die für den Betrieb der Brennstoffzellen notwendige Temperatur erwärmt, so daß praktisch keine Minderung der Leistungsfähigkeit des Festelektrolyt-Hochtemperatur-Brennstoffzellenmoduls eintritt. Das Betriebsmittel kann somit durch eine niedrige Eingangstemperatur zur Kühlung des Brennstoffzellenmoduls verwendet werden, ohne daß es zu einer Verringerung der Leistung kommt. Aufgrund der Erwärmung des Betriebsmittels und der daraus folgenden Reduzierung der Temperaturdifferenzen im aktiven Zellenbereich werden außerdem die mechanisch empfindlichen Elektrolyte nicht beschädigt. Da die Temperatur beim Einleiten der Betriebsmittel in das Festelektrolyt-Hochtemperatur-Brennstoffzellenmodul niedriger ist als bei den bekannten Verfahren, reduziert sich der für die Abführung der Wärme benötigte Massendurchsatz von Betriebsmitteln. Durch das beanspruchte Verfahren wird ein kompakter Aufbau des Festelektrolyt-Hochtemperatur-Brennstoffzellenmoduls ermöglicht.

Bei dem Festelektrolyt-Hochtemperatur-Brennstoffzellenmodul mit mehreren aufeinandergestapelten Brennstoffzellen, denen ein zum Betrieb der Brennstoffzellen notwendiges Betriebsmittel zugeführt wird, sind gemäß der Erfindung innerhalb des Festelektrolyt-Hochtemperatur-Brennstoffzellenmoduls angeordnete Mittel zum Erwärmen des Betriebsmittels vor seinem Einspeisen in die Brennstoffzellen vorgesehen.

Erfindungsgemäß ist ein erster Kanalabschnitt am Rande des Festelektrolyt-Hochtemperatur-Brennstoffzellenmoduls angenähert parallel zu dessen Längsachse angeordnet. Dieser erstreckt sich über die gesamte Länge des Festelektrolyt-Hochtemperatur-Brennstoffzellenmoduls und mündet in einen zweiten Kanalabschnitt, der angenähert parallel zum ersten Kanalabschnitt angeordnet ist und mit den Brennstoffzellen kommuniziert. Das Betriebsmittel wird somit auf einer Strecke, die angenähert der Länge des Festelektrolyt-Hochtemperatur-Brennstoffzellenmoduls entspricht, vor dem Einspeisen in die Brennstoffzellen erwärmt.

In einer weiteren Ausgestaltung umfaßt der erste Kanalabschnitt einen ersten Teilabschnitt, der angenähert parallel zur Längsachse am Rande des Festelektrolyt-Hochtemperatur-Brennstoffzellenmoduls angeordnet ist. Der erste Teilabschnitt, der sich über die gesamte Länge des Festelektrolyt-Hochtemperatur-Brennstoffzellenmoduls erstreckt, mündet in einen angenähert senkrecht zur Längsachse verlaufenden zweiten Teilabschnitt, der in einen dritten Teilabschnitt mündet, der angenähert parallel zur Längsachse am gegenüberliegenden Rand angeordnet ist und sich über die gesamte Länge des Festelektrolyt-Hochtemperatur-Brennstoffzellemoduls erstreckt. Dieser mündet in einen zweiten Kanalabschnitt, der angenähert parallel zum dritten Teilabschnitt des ersten Kanalabschnitts angeordnet ist und mit den Brennstoffzellen kommuniziert. In dieser besonderen Ausgestaltung wird das Betriebsmittel somit auf einer Strecke, die mehr als der doppelten Länge des Festelektrolyt-Hochtemperatur-Brennstoffzellemoduls entspricht, vor dem Einspeisen in die Brennstoffzellen erwärmt.

Bei einer weiteren bevorzugten Ausgestaltung umfaßt der erste und/oder zweite Kanalabschnitt jeweils mindestens zwei parallele Kanalabschnitte. Durch die Vergrößerung der Anzahl der Kanalabschnitte wird die Oberfläche für die Aufnahme der Wärme vergrößert. Dies führt zu einer verbesserten Wärmeabführung aus dem Festelektrolyt-Hochtemperatur-Brennstoffzellenmodul.

In einer weiteren Ausgestaltung wird der erste und zweite Kanalabschnitt zum Zuführen und Erwärmen des Betriebsmittels für das Reformieren eines im Betriebsmittel enthaltenen Brennmittels mit Katalysatormaterial beschichtet. Dadurch wird das Brennmittel bereits vor dem Einspeisen in die Brennstoffzellen reformiert und die mechanischen Spannungen im Festelektrolyt-Elektroden-Element, die aufgrund der Temperaturdifferenzen bei dem Reformieren in der Brennstoffzelle auftreten, weitgehend vermieden.

Zur weiteren Erläuterung der Erfindung wird auf die Ausführungsbeispiele der Zeichnung verwiesen. Es zeigen:
- FIG 1: einen Querschnitt durch ein Festelektrolyt-Hochtemperatur-Brennstoffzellenmodul gemäß der Erfindung in schematischer Darstellung.
- FIG 2: eine Aufsicht auf eine bipolare Platte des Festelektrolyt-Hochtemperatur-Brennstoffzellenmoduls aus FIG 1 gemäß der Erfindung in schematischer Darstellung.
- FIG 3: einen Querschnitt durch ein Festelektrolyt-Hochtemperatur-Brennstoffzellenmodul gemäß der Erfindung in schematischer Darstellung.

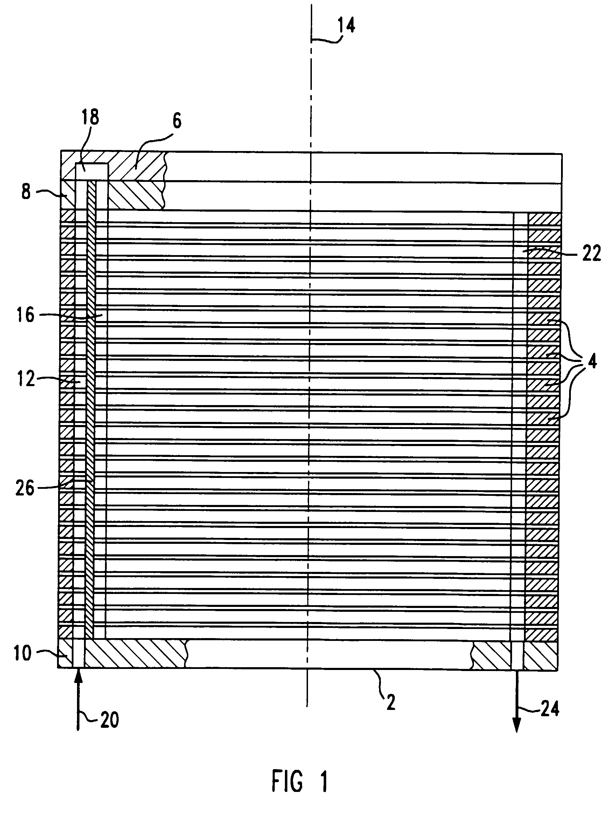

Gemäß **FIG 1** umfaßt ein Festelektrolyt-Hochtemperatur-Brennstoffzellenmodul 2 eine Vielzahl von rechteckigen, plattenförmigen Brennstoffzellen 4. Das Festelektrolyt-Hochtemperatur-Brennstoffzellenmodul 2 wird mit zwei Deckplatten 6 und 8 und einer Bodenplatte 10 oben bzw. unten abgeschlossen. Ein erster Kanalabschnitt 12 ist am Rande des Festelektrolyt-Hochtemperatur-Brennstoffzellenmoduls 2 angenähert parallel zu dessen Längsachse 14 angeordnet und erstreckt sich über die gesamte Länge des Festelektrolyt-Hochtemperatur-Brennstoffzellenmoduls 2.

Angenähert parallel zum ersten Kanalabschnitt 12 ist ein zweiter Kanalabschnitt 16 angeordnet, der mit den Brennstoffzellen 4 kommuniziert. Der erste Kanalabschnitt 12 und der zweite Kanalabschnitt 16 münden in eine Aussparung 18, die in der Deckplatte 6 angeordnet ist. Ein Betriebsmittel, beispielsweise Wasserstoff oder Sauerstoff, dessen Strömungsrichtung durch einen Pfeil 20 angedeutet ist, strömt durch die Bodenplatte 10 in das Festelektrolyt-Hochtemperatur-Brennstoffzellenmodul 2 ein. Es gelangt über den ersten Kanalabschnitt 12 und die Aussparung 18 in den zweiten Kanalabschnitt 16 der mit den Brennstoffzellen 4 kommuniziert. Nach der dort erfolgenden Reaktion, mit anderen Worten Verbrennung, wird das Betriebsmittel über einen dritten Kanalabschnitt 22 durch die Bodenplatte 10 abgeführt. Die Srömungsrichtung des austretenden Betriebsmittels ist durch einen Pfeil 24 angedeutet.

Ein Teil der in den Brennstoffzellen 4 produzierten Wärme wird somit außerhalb der Brennstoffzellen 4 aber innerhalb des Festelektrolyt-Hochtemperatur-Brennstoffzellenmoduls 2 vor dem Einspeisen in die Brennstoffzellen 4 auf das Betriebsmittel übertragen.

Die ersten und zweiten Kanalabschnitte 12 bzw. 16 werden in dieser Ausführungsform durch eine Trennwand 26 aus isolierender Keramik, beispielsweise Al203, Zr02 (YSZ) oder MgAl204-Spinell, getrennt.

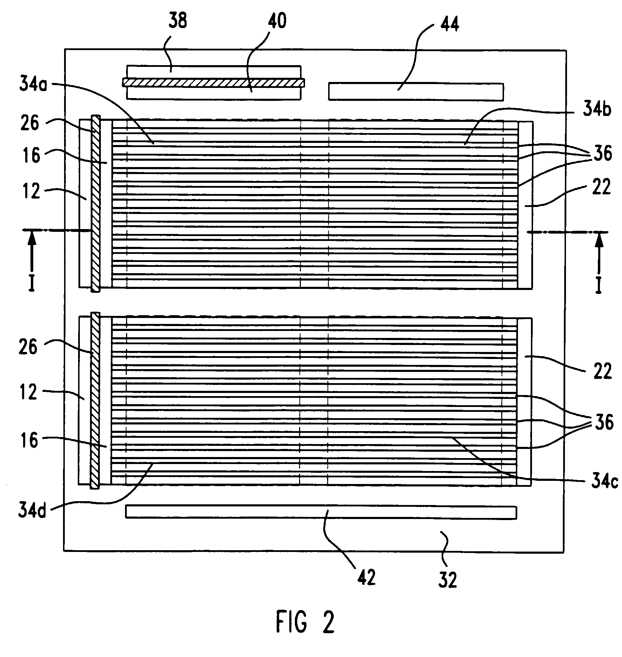

Die **FIG 2** zeigt in einer Aufsicht den Aufbau einer nach dem Kreuzgleichstromprinzip aufgebauten bipolaren Platte 32. Diese ist einteilig ausgeführt. Am Rande der bipolaren Platte 32 sind schlitzförmige Durchbrüche, die zum ersten und zweiten Kanalabschnitt 12 bzw. 16 gehören, für eine 2 x 2 Zellenanordnung 34a,b,c und d für ein Betriebsmittel angeordnet. Diese kommunizieren mit einem Rillenfeld 36, welches das Festelektrolyt-Elektroden-Element, den eigentlichen Reaktionsraum, mit dem Betriebsmittel versorgt.

Dieses Rillenfeld 36, das aus unmittelbar aneinanderliegenden Rillen zusammengesetzt ist, überdeckt, mit Ausnahme eines Randbereichs, nahezu die gesamte Fläche der bipolaren Platte 32. Es kommuniziert mit den schlitzförmigen Durchbrüchen des dritten Kanalabschnitts 22 für die Abführung des Betriebsmittels. Die schlitzförmigen Durchbrüche des ersten und zweiten Kanalabschnitts 38 bzw. 40 führen das zweite Betriebsmittel dem Festelektrolyt-Elektroden-Element zu und werden durch den schlitzförmigen Durchbruch des Kanalabschnittes 42 parallel umgelenkt. Das Rillenfeld, welches mit den Kanalabschnitten 40, 42 und 44 kommuniziert und senkrecht zum Rillenfeld 36 angeordnet ist, daher der Begriff Kreuzgleichstromprinzip, ist nicht dargestellt. Es befindet sich auf der abgewandten Seite der bipolaren Platte 32.

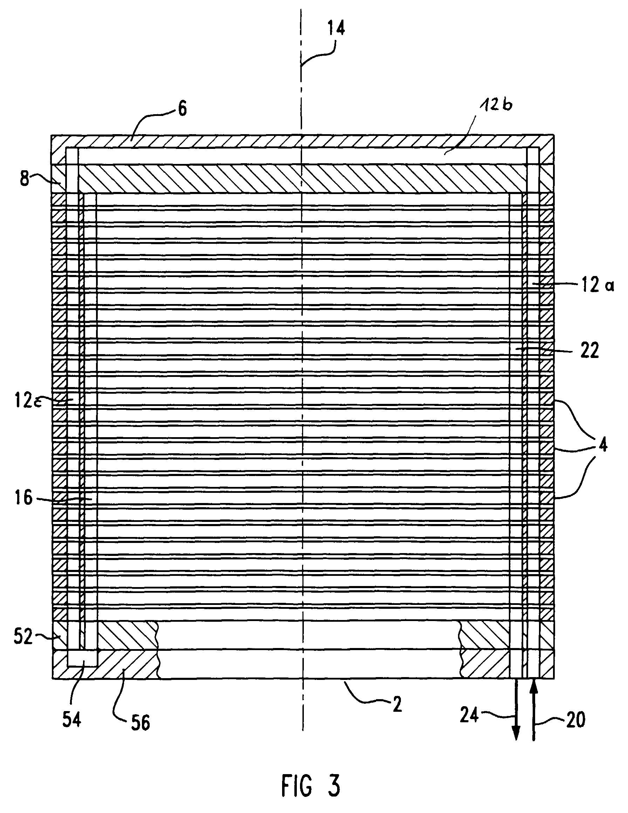

Eine weitere Ausführungsform ist in **FIG 3** veranschaulicht. Das Festelektrolyt-Hochtemperatur-Brennstoffzellenmodul 2 umfaßt in dieser Ausführungsform eine Vielzahl von rechteckigen, plattenförmigen Brennstoffzellen 4 und ist mit zwei Deckplatten 6 und 8 und zwei Bodenplatten 52 und 56 oben bzw. unten abgeschlossen.

Das Einleiten und Abführen der Betriebsmittel, angedeutet durch die Pfeile der Strömungsrichtungen der Betriebsmittel 20 bzw. 24, erfolgt auf derselben Seite des Festelektrolyt-Hochtemperatur-Brennstoffzellenmoduls 2 durch die Bodenplatten 52 und 56. In dieser Ausgestaltung umfaßt der erste Kanalabschnitt 12 einen ersten Teilabschnitt 12a, der angenähert parallel zur Längsachse 14 am Rande des Festelektrolyt-Hochtemperatur-Brennstoffzellenmoduls 2 angeordnet ist. Er ist parallel zu dem dritten Kanalabschnitt 22 angeordnet, der das Betriebsmittel nach erfolgter Reaktion in den Brennstoffzellen abführt.

Der erste Teilabschnitt 12a, der sich über die gesamte Länge des Festelektrolyt-Hochtemperatur-Brennstoffzellenmoduls 2 erstreckt, mündet in einen angenähert senkrecht zur Längsachse 14 durch eine Aussparung in der oberen Deckplatte 6 verlaufenden zweiten Teilabschnitt 12b, der in einen dritten Teilabschnitt 12c mündet, der angenähert parallel zur Längsachse 14 am gegenüberliegenden Rand angeordnet ist und sich über die gesamte Länge des Festelektrolyt-Hochtemperatur-Brennstoffzellenmoduls 2 erstreckt. Dieser mündet über eine Aussparung 54 in einer Bodenplatte 56 in einen zweiten Kanalabschnitt 16, der angenähert parallel zum dritten Teilabschnitt 12c des ersten Kanalabschnitts 12 angeordnet ist und mit den Brennstoffzellen 4 kommuniziert.

In dieser bevorzugten Ausgestaltung wird das Betriebsmittel somit auf einer Strecke, die mehr als der doppelten Länge des Festelektrolyt-Hochtemperatur-Brennstoffzellenmoduls 2 entspricht, vor dem Einspeisen in die Brennstoffzellen 4 erwärmt.

## Patentansprüche

1. Verfahren zum Betrieb eines Festelektrolyt-Hochtemperatur-Brennstoffzellenmoduls (2), das sich aus mehreren aufeinandergestapelten Brennstoffzellen (4) zusammensetzt, denen ein zum Betrieb der Brennstoffzellen notwendiges Betriebsmittel zugeführt wird,
**dadurch gekennzeichnet**, daß das Betriebsmittel vor seinem Einspeisen in die Brennstoffzellen (4), zum Aufnehmen der in den Brennstoffzellen (4) beim Verbrennungsprozess entstehenden Wärme, einen ersten schlitzförmigen Kanalabschnitt (12) durchströmt, der im Randbereich des Festelektrolyt-Hochtemperatur-Brennstoffzellenmoduls (2) angenähert parallel zu dessen Längsachse angeordnet ist, und sich über die gesamte Länge des Festelektrolyt-Hochtemperatur-Brennstoffzellenmoduls (2) und angenähert über die gesamte Breite der Brennstoffzellen (4) erstreckt, und anschließend in einen zweiten Kanalabschnitt (16) strömt, der angenähert parallel zum ersten Kanalabschnitt (12) angeordnet ist und mit den Brennstoffzellen (4) kommuniziert.

2. Festelektrolyt-Hochtemperatur-Brennstoffzellenmodul (2) mit mehreren aufeinandergestapelten Brennstoffzellen (4), denen ein zum Betrieb der Brennstoffzellen notwendiges Betriebsmittel zugeführt wird, wobei innerhalb des Festelektrolyt-Hochtemperatur-Brennstoffzellenmoduls (2) angeordnete Mittel zum Erwärmen des Betriebsmittels vor seinem Einspeisen in die Brennstoffzellen (4) vorgesehen sind,
**dadurch gekennzeichnet**, daß ein erster Kanalabschnitt (12) am Rande des Festelektrolyt-Hochtemperatur-Brennstoffzellenmoduls (2) angenähert parallel zu dessen Längsachse (14) angeordnet ist, der sich über die gesamte Länge des Festelektrolyt-Hochtemperatur-Brennstoffzellenmoduls (2) erstreckt und in einen zweiten Kanalabschnitt (16) mündet, der angenähert parallel zum ersten Kanalabschnitt (12) angeordnet ist, und mit den Brennstoffzellen (4) kommuniziert, wobei der erste (12) und der zweite Kanalabschnitt (16) als schlitzförmige Durchbrüche ausgebildet sind, die sich angenähert über die gesamte Breite der Brennstoffzellen (4) erstrecken.

3. Festelektrolyt-Hochtemperatur-Brennstoffzellenmodul (2) nach Anspruch 2, bei dem der erste Kanalabschnitt (12) einen ersten Teilabschnitt (12a) umfaßt, der angenähert parallel zur Längsachse (14) am Rande des Festelektrolyt-Hochtemperatur-Brennstoffzellenmoduls (2) angeordnet ist und sich über die gesamte Länge des Festelektrolyt-Hochtemperatur-Brennstoffzellenmoduls (2) erstreckt und über einen angenähert senkrecht zur Längsachse (14) durch eine Aussparung in der oberen Deckplatte (6) verlaufenden zweiten Teilabschnitt (12b) in einen dritten Teilabschnitt (12c) des ersten Kanalabschnitts (12) mündet, der angenähert parallel zur Längsachse (14) am gegenüberliegenden Rand angeordnet ist und sich über die gesamte Länge des Festelektrolyt-Hochtemperatur-Brennstoffzellenmoduls (2) erstreckt und über eine Aussparung (54) in einer Bodenplatte (56) in einen zweiten Kanalabschnitt (16) mündet, der angenähert parallel zum dritten Teilabschnitt (12c) des ersten Kanalabschnitts (12) angeordenet ist und mit den Brennstoffzellen (4) kommuniziert.

4. Festelektrolyt-Hochtemperatur-Brennstoffzellenmodul (2) nach Anspruch 3, bei dem jeweils wenigstens zwei zueinander parallele erste Kanalabschnitte vorgesehen sind.

5. Festelektrolyt-Hochtemperatur-Brennstoffzellemodul (2) nach Anspruch 4, bei dem der erste und zweite Kanalabschnitt (12, 16) zum Zuführen und Erwärmen des Betriebsmittels für das Reformieren eines im Betriebsmittel enthaltenen Brennmittels mit Katalysatormaterial beschichtet sind.

## Claims

1. Method of operating a solid electrolyte high temperature fuel cell module (2) which is composed of a plurality of fuel cells (4) stacked on one another, to which an operating medium necessary for operating the fuel cells is fed, characterized in that the operating medium, before it is fed into the fuel cells (4), flows through a first slot-like duct section (12), in order to pick up the heat produced in the fuel cells (4) during the combustion process, said section being arranged in the edge region of the solid electrolyte high temperature fuel cell module (2), approximately parallel to the longitudinal axis of the latter, and extending over the entire length of the solid electrolyte high temperature fuel cell module (2) and approximately over the entire width of the fuel cells (4), and the operating medium subsequently flows into a second duct section (16), which is arranged approximately parallel to the first duct section (12) and communicates with the fuel cells (4).

2. Solid electrolyte high temperature fuel cell module (2) having a plurality of fuel cells (4) stacked on one another, to which an operating medium necessary for operating the fuel cells is fed, means being provided, arranged inside the solid electrolyte high temperature fuel cell module (2), for heating the operating medium before it is fed into the fuel cells (4), characterized in that a first duct section (12) is arranged at the edge of the solid electrolyte high temperature fuel cell module (2), approximately parallel to the longitudinal axis (14) of the latter, said section extending over the entire length of the solid electrolyte high temperature fuel cell module (2) and opening into a second duct section (16), which is arranged approximately parallel to the first duct section (12), and communicates with the fuel cells (4), the first duct section (12) and the second duct section (16) being designed as slot-like apertures which extend approximately over the entire width of the fuel cells (4).

3. Solid electrolyte high temperature fuel cell module (2) according to Claim 2, in which the first duct section (12) comprises a first subsection (12a), which is arranged approximately parallel to the longitudinal axis (14) at the edge of the solid electrolyte high temperature fuel cell module (2) and extends over the entire length of the solid electrolyte high temperature fuel cell module (2), and, via a second subsection (12b) running approximately vertically with respect to the longitudinal axis (14) through a cut-out in the top cover plate (6), opens into a third subsection (12c) of the first duct section (12), which is arranged approximately parallel to the longitudinal axis (14) on the opposite edge and extends over the entire length of the solid electrolyte high temperature fuel cell module (2) and, via a cut-out (54) in a base plate (56), opens into a second duct section (16), which is arranged approximately parallel to the third subsection (12c) of the first duct section (12) and communicates with the fuel cells (4).

4. Solid electrolyte high temperature fuel cell module (2) according to Claim 3, in which at least two mutually parallel first duct sections are provided in each case.

5. Solid electrolyte high temperature fuel cell module (2) according to Claim 4, in which the first and second duct section (12, 16) for feeding and heating the operating medium are coated with catalytic material for reforming a combustion medium contained in the operating medium.

## Revendications

1. Procédé pour faire fonctionner un module (2) de pile à combustible à haute température à électrolyte solide, qui se compose de plusieurs piles (4) à combustible empilées les unes sur les autres et auxquelles est envoyé un agent de fonctionnement nécessaire au fonctionnement des piles à combustible,
caractérisé en ce que l'agent de fonctionnement passe avant son entrée dans les piles (4) à combustible, en vue d'absorber la chaleur produite dans les piles (4) à combustible lors du processus de combustion, dans un tronçon (12) de canal en forme de fente qui est disposé dans la région de bord du module (2) de pile à combustible à haute température à électrolyte solide, sensiblement parallèlement à son axe longitudinal et qui s'étend sur toute la longueur du module (2) de pile à combustible à haute température à électrolyte solide et à peu près sur toute la largeur des piles (4) à combustible et ensuite passe dans un deuxième tronçon (16) de canal, qui est sensiblement parallèle au premier tronçon (12) de canal et qui communique avec les piles (4) à combustible.

2. Module (2) de pile à combustible à haute température et à électrolyte solide, comprenant plusieurs piles (4) à combustible empilées les unes sur les autres et auxquelles est envoyé un agent de fonctionnement nécessaire au fonctionnement des piles à combustible, des moyens de réchauffement de l'agent de fonctionnement avant son entrée dans les piles (4) à combustible étant prévus dans le module (2) de pile à combustible à haute température et à électrolyte solide,
caractérisé en ce qu'un premier tronçon (12) de canal est disposé au bord du module (2) de pile à combustible à haute température à électrolyte solide à peu près parallèlement à l'axe (14) longitudinal de ce dernier, en s'étendant sur toute la longueur du module (2) de pile à combustible à haute température à électrolyte solide et en débouchant dans un deuxième tronçon (16) de canal, qui est à peu près parallèle au premier tronçon (12) de canal et qui communique avec les piles (4) à combustible, le premier (12) et le deuxième (16) tronçons de canal étant constitués sous la forme de passages en forme de fente qui s'étendent à peu près sur toute la largeur des piles (4) à combustible.

3. Module (2) de pile à combustible à haute température et à électrolyte solide suivant la revendication 2, dans lequel le premier tronçon (12) de canal comporte un premier sous-tronçon (12a) qui est à peu près parallèle à l'axe (14) longitudinal au bord du module (2) de pile à combustible à haute température et à électrolyte solide, qui s'étend sur toute la longueur du module (2) de pile à combustible à haute température et électrolyte solide et qui débouche par l'intermédiaire d'un deuxième sous-tronçon (12b), s'étendant à peu près perpendiculairement à l'axe (14) longitudinal, dans un évidement ménagé dans le plateau (6) supérieur formant couvercle dans un troisième sous-tronçon (12c) du premier tronçon (12) de canal, qui est disposé sur le bord opposé en étant sensiblement parallèle à l'axe (14) longitudinal, qui s'étend sur toute la longueur du module (2) de pile à combustible à haute température et à électrolyte solide et qui débouche par un évidement (54) ménagé dans une plaque (56) de fond dans un deuxième tronçon (16) de canal, qui est à peu près parallèle au troisième sous-tronçon (12c) du premier tronçon (12) de canal et qui communique avec les piles (4) à combustible.

4. Module (2) de pile à combustible à haute température et à électrolyte solide suivant la revendication 3, dans lequel il est prévu respectivement au moins deux premiers tronçons de canal parallèles entre eux.

5. Module (2) de pile à combustible à haute température et à électrolyte solide suivant la revendication 4, dans lequel le premier et le deuxième tronçons (12, 16) de canal sont revêtus d'une matière formant catalyseur pour l'apport et le chauffage de l'agent de fonctionnement pour le reformage d'un combustible contenu dans l'agent de fonctionnement.
